# EUROPEAN PATENT APPLICATION

(11) **EP 2 067 539 A1**
(43) Date of publication of application: **10.06.2009**
(21) Application number: 07792289.6
(22) Date of filing: 09.08.2007
(51) Int. Cl.: B09B 3/00

(54) **METHOD OF TREATING ASBESTOS**

(30) Priority: 29.09.2006 JP 2006266474
(71) Applicant: K.K.M.-TEC, Sakai-shi, Osaka 590-0974 (JP); K.K.Miyabijyusetsu, Kishiwada-shi, Osaka 596-0827 (JP); Hirota, Takezi, Takaishi-shi, Osaka 590-0014 (JP)
(72) Inventor: HIROTA, Takezi, Takaishi-shi, Osaka 590-0014 (JP)
(74) Representative: Harland, Linda Jane
(86) International application number: PCT/JP2007/065639
(87) International publication number: WO 2008/041416

(57) **Abstract**

Object: An object of the present invention is to provide a novel method for treating asbestos in which asbestos materials such as asbestos products used for refractory coating materials of ferroconcrete structures, heat/sound insulation materials for constructions, heat insulating coating materials of heating/warming appliances, and friction materials for vehicular brakes and asbestos materials troublesome for treatment can be sealed by safe and simple work and the asbestos can be converted in harmless substances at a relatively low temperature.

Solution: The method for treating asbestos involves treating an asbestos material with a water glass-like aqueous solution to coat the asbestos material with a glassy substance, and successively carrying out heating treatment.

## Description

### TECHNICAL FIELD

The present invention relates to a method for treating asbestos to convert asbestos materials into harmless substances by safe and simple means.

### BACKGROUND ART

In general, mineral fibers (asbestos), so-called "rock wool", have been used for great various materials such as refractory coating materials of ferroconcrete structures, heat/sound insulation materials for constructions, heat insulating coating materials of heating/warming appliances, and friction materials for vehicular brakes since the fibers are excellent in refractoriness, heat insulation, sound insulation, friction resistance, weather resistance and the like.

However, since asbestos is a gathered body of fibers each having a very fine fiber diameter and further each of the fibers has a needle-like form with an acute tip, micro needle-like particles (asbestos powder dust) formed by fraction of asbestos are easy to be aspirated in the human body together with aspirated air.

Further, the asbestos powder dust once aspirated in the human body is kept in the state that the asbestos powder dust stick to the pulmonary mucous membrane and esophageal mucous membrane and remains in the body for a long duration without being corroded since it is a mineral fiber. Thus, it is confirmed that the asbestos powder dust remaining in the body is a causative substance of development of mesothelioma and cancer in the digestive organs, respiratory organs, and the like.

Therefore, in Japan, production, import and use of crocidolite (blue asbestos) and amosite (brown asbestos), which have particularly strong toxicity among asbestos, were prohibited in 1995, and it is planned to completely prohibit use of chrysotile (white asbestos), in which the amount used is largest, in 2008.

On the other hand, a countermeasure against asbestos which has been used so far, particularly asbestos which has been used for constructions, mainly includes a "removal method" for separating and removing asbestos layers; an "enclosing method" for enclosing and sealing asbestos layers by sheets, composite panels, slate plates, corrugated plates, sealing bonds, or the like; a "sealing method" for wrapping and sealing asbestos in a sealing agent by applying the sealing agent to asbestos layers; or the like.

### DISCLOSURE OF THE INVENTION

### PROBLEMS TO BE SOLVED BY THE INVENTION

However, in the "removal method" among the above-mentioned countermeasures, since occurrence of secondary pollution due to asbestos subjected to landfill disposal after the removal is pointed out, it becomes difficult to secure disposal sites, and thus presently the disposal sites are greatly lacking.

Further, with respect to the "enclosing method" among the above-mentioned countermeasures, there still remains a future problem that the enclosed asbestos may run out at the time of dismantling of a construction or a fire disaster in a construction.

Furthermore, with respect to the "sealing method" among the above-mentioned countermeasures, since many organic type substances are used as a sealing agent, it is pointed out that organic type resins are melted at the time of a fire disaster in a construction and the sealed asbestos may run out.

From the above-mentioned viewpoints, means of removing the sealed asbestos and carrying out the landfill treatment at a proper place is also employed, however, the asbestos in a sealing agent still retains hazardous property, and therefore there is a risk that the asbestos is again exposed due to the corrosion of the sealing agent in soil.

Further, investigations on use of inorganic type sealing agents in place of the organic type sealing agent have been made (e.g. Patent Document 1), however just the same, the above-mentioned problems of securing disposal sites and secondary pollution due to re-exposure of asbestos still remain.

Patent Document 1: Japanese Patent Application Laid-Open (JP-A) No. 2002-137976

The inventors of the present invention have made eager studies to solve such problems and accordingly have completed a method for treating asbestos of the present invention, including treating an asbestos material with a water glass-like aqueous solution, to coat the asbestos material with a glassy substance, and then carrying out heating treatment.

That is, it is known that, for example, chrysotile among asbestos is heated at about 700°C to remove crystal water and is heated at about 900°C to be denatured into harmless foresterite. However, in order to completely convert asbestos into a harmless substance in a combustion furnace, in view of various circumstances such as the volume of the asbestos to be heated and scattering of asbestos powder dust during the heating treatment, a high temperature furnace to be actually used at 1400 to 1500°C is required. Therefore, there is a problem that common combustion furnaces cannot stand such a high temperature.

With respect to this matter, the inventors of the present invention have found that when asbestos coated with a glassy substance is fired in a furnace, first, crystal water is isolated from the asbestos in the glassy substance by heating at about 700°C to give powdered asbestos which loses the bonding power and further when the glassy substance coating the surface of the asbestos is started dissolving at a temperature exceeding 800°C, the asbestos which loses the bonding power is firmly bonded with the melted glassy substance while being kept in the powder state and thus a harmless solid matter can be obtained. Accordingly, the inventors have found that asbestos can sufficiently be converted into harmless substances by heating treatment at a relatively low temperature.

Further, the inventors have found that the harmless solid matter is not limited in a place to be landfilled and also may be made usable again as construction materials such as cement raw materials, aggregate, and the like.

The present invention has been completed on the basis of the above-mentioned findings, and an object of the present invention is to provide a novel method for treating asbestos in which asbestos can be sealed by safe and simple work and asbestos can be converted into harmless substances at a relatively low temperature.

### MEANS FOR SOLVING THE PROBLEMS

The method for treating asbestos of the present invention as means for solving the above-mentioned problems is characterized in that an asbestos material is treated with a water glass-like aqueous solution to coat the asbestos material with a glassy substance, and then carrying out heating treatment.
Hereinafter, the method for treating asbestos of the present invention (hereinafter, referred to as the method of the present invention) will be described in detail.

The method of the present invention is a method for safely removing asbestos products used for refractory coating materials of ferroconcrete structures, heat/sound insulation materials for constructions, heat insulating coating materials of heating/warming appliances, and friction materials for vehicular brakes, asbestos materials troublesome for treatment, and the like, and the method is not particularly limited in the application range as long as it is for materials containing asbestos. That is, "asbestos material" in the method of the present invention means any material containing asbestos. Further, the method of the present invention can preferably be applied for various kinds of asbestos such as crocidolite, amosite, chrysotile, and the like.

"Water glass-like aqueous solution" used in the method of the present invention is not particularly limited as long as it has fluidity capable of permeating voids among asbestos fibers in the above-mentioned asbestos material and a glassy substance (an amorphous solid showing glass transition phenomenon by temperature increase or a substance to be such a solid) can be hardened in the inside and outside of the asbestos fibers after the permeating. In general, aqueous solutions containing silicates such as lithium silicate, sodium silicate, potassium silicate, and the like as a main component are used; however the water glass-like aqueous solution is not limited to them and those which can form glassy substances such as aqueous solutions containing arsenic, sulfur, boric acid, phosphoric acid, and their salts as a main component may be preferably used.

In the method of the present invention, the reason for using the water glass-like aqueous solution is because this kind of aqueous solution contains a compound component which is ionized in water, does not form a granular water dispersion and thus quickly permeates any water-permeable substances, even very small voids among asbestos fibers together with water which is a solvent.

As "Water" adjusting the water glass-like aqueous solution, at least one kind selected from or a mixture of any of tap water, industrial water, natural water, distilled water, ion-exchanged water, and the like, may be used. In the method of the present invention, particularly, water containing molecule clusters made minute by ultrasonic or magnetic treatment such as so-called "nano water" (e.g. the following Patent Documents 2 to 4) is preferable to be used.

Patent Document 2: JP-A No. 10-296249
Patent Document 3: JP-A No. 2000-84562
Patent Document 4: JP-A No. 2000-263062
Patent Document 5: JP-A No. 2001-348581

The reason for that is because, in the case water containing molecule clusters made minute is used for preparation of the water glass-like aqueous solution, the fluidity is remarkably improved and the permeability to voids among asbestos fibers becomes good even if the same concentration is used, as compared with solutions using tap water, industrial water, natural water, distilled water, and ion-exchanged water. As a result, a water glass-like aqueous solution with a relatively high concentration can be used and the coating of asbestos with the glassy substance may be made to be further firm.

In the method of the present invention, the concentration of the component forming the glassy substance in the water glass-like aqueous solution may be properly determined in accordance with the type of the component and water to be used for adjustment, the type of asbestos materials to be treated, or the like and thus is not particularly limited; however, in general, if the concentration is too high, it is needed to repeat the treatment a plurality of times. On the other hand, if the concentration is too low, the fluidity is decreased. Therefore, in the method of the present invention, in the case of using common water such as tap water, industrial water, natural water, distilled water, and ion-exchanged water, the concentration is preferably 5 to 15% by weight and in the case of using water containing molecule clusters made minute, the concentration is preferably 20 to 35% by weight.

Further, in the method of the present invention, in order to improve the permeability of the water glass-like aqueous solution, it is preferable to use a surfactant together with the above-mentioned water glass-like aqueous solution.

The surfactant is not particularly limited as long as it can improve the permeability of the water glass-like aqueous solution, and an anionic surfactant, cationic surfactant, nonionic surfactant, amphoteric surfactant, and non-ionic surfactant can be all used.

For example, specific examples of the above-mentioned anionic surfactant may include a fatty acid salt type surfactant, an alkylbenzenesulfonic acid salt type surfactant, an alkyl sulfuric acid ester salt type surfactant, a linear secondary sulfonic acid salt type surfactant, dialkylsulfosuccinic acid ester salt type surfactant, a POE alkyl or alkyl phenyl ether sulfuric acid ester salt type surfactant, a POE alkyl or alkyl phenyl ether phosphoric acid ester salt type surfactant, and the like.

On the other hand, examples of the cationic surfactant may include an alkylpicolinium chloride type surfactant, an alkyltriethylammonium chloride type surfactant, another quaternary ammonium salt type surfactant, and the like.

Further, examples of the nonionic surfactant may include a POE alkyl phenyl ether type nonionic surfactant, a POE alkyl ether type nonionic surfactant, a POE polyoxypropylene block polymer type nonionic surfactant, a POE glycol alkyl ester type nonionic surfactant, a sorbitan fatty acid ester type nonionic surfactant, a sucrose fatty acid ester type nonionic surfactant, and the like.

Further, examples of the amphoteric surfactant may include an alkylcarboxybetaine type surfactant, an alkylaminocarboxylic acid type surfactant, and an alkyl imidazoline type surfactant, and the like.

Furthermore, examples of the non-ionic surfactant may include a POE alkyl ether, a POE alkyl phenyl ether, a sucrose fatty acid ester, ethylene glycol, and glycerin, and the like.

Preferable examples (trade name) of these surfactants may include "TRITON (N, X, CF, DF, BG, Hydrotrope series, and the like)", "Tergitol (15-S, TMN series, and the like), and "Dowfax", manufactured by The Dow Chemical Co., and the like.

The addition amount of these surfactants is not particularly limited; however, in general, it is preferably 0.001 to 1.0% by weight and more preferably 0.002 to 0.1 % by weight in the entire water glass-like aqueous solution.

If the addition amount of the surfactants is less than 0.001% by weight in the entire water glass-like aqueous solution, desired improvement of the permeability cannot be obtained sufficiently and therefore, it is not preferable. On the other hand, if the addition amount exceeds 1.0% by weight in the entire water glass-like aqueous solution, it is impossible to cause a further effect, and therefore it is not preferable from the viewpoint of economy.

These surfactants may be added alone or in a form of a proper mixture of two or more kinds.

In addition, the above-mentioned water glass-like aqueous solution may be hardened only by drying, however it takes a relatively long time to harden the solution. Further, the glassy substance hardened in such a state often lacks in water resistance and heat resistance and sometimes becomes fragile by reaction with carbon dioxide gas and therefore, in the method of the present invention, it is preferable to use a curing agent together with the above-mentioned water glass-like aqueous solution.

The above-mentioned curing agent is not particularly limited as long as it is added to the water glass-like aqueous solution to promote hardening of the water glass-like aqueous solution, and conventionally known curing agents can be preferably used. Specific examples thereof include at least one or more compounds selected from organic carboxylic acids such as formic acid, acetic acid, propionic acid, and the like; organic sulfonic acids such as benzenesulfonic acid, toluenesulfonic acid, and the like; esters such as methyl formate, methyl acetate, ethyl acetate, and the like; aldehydes such as formaldehyde, acetaldehyde, glyoxal, and the like; inorganic acids and their salts such as hydrochloric acid, sulfuric acid, nitric acid, boric acid, chloric acid, metaphosphoric acid, pyrophosphoric acid, polyphosphoric acid, hypophosphorous acid, phosphorous acid, perphosphoric acid, potassium hypophosphite, potassium phosphite, and the like; polyvalent metal oxides such as zinc oxide, calcium oxide, magnesium oxide, lead oxide, aluminum oxide, and the like; silicides such as calcium silicate and the like; silicofluorides such as sodium silicofluoride, potassium silicofluoride, and the like.

Among them, in the method of the present invention, since asbestos is coated with the glassy substance and successively heated, an inorganic type curing agent is particularly preferable to be used compared with an organic type curing agent. Further, since a curing agent of a type to be dispersed in the water glass-like aqueous solution sometimes inhibits the permeability of the water glass-like aqueous solution, it is preferable to use those which have hydrophilicity for dissolution in water as a solvent of the water glass-like aqueous solution.

Further, in the method of the present invention, by treating an asbestos material with the above-mentioned water glass-like aqueous solution, the water glass-like aqueous solution permeates the voids of asbestos fibers of the asbestos material and at the same time, the water glass-like aqueous solution is hardened to coat the inside and outside of the asbestos material with the glassy substance.

Herein, means for treating the asbestos material with the water glass-like aqueous solution is not particularly limited and for example, examples thereof may include a method of immersing the asbestos material in a bath filled with the water glass-like aqueous solution, a method of applying the water glass-like aqueous solution to the asbestos material with a brush, or by spraying with a spray or a nozzle, and the like.

The above-mentioned treatment method by immersion is advantageous as compared with the treatment method by application in a point that the treatment time sufficient to impregnate any minute parts of the asbestos fiber meshes in the asbestos material with the water glass-like aqueous solution can be assured, however it requires the work of removing the asbestos material from a building where the asbestos material is used, or the like, and transporting the asbestos material to a treatment site. Therefore, during the removing work and the transportation work, it is required to take sufficient measures such as protective clothing and protective masks in order to protect workers from pollution with asbestos.

On the other hand, in the above-mentioned treatment method by application, since application can be carried out directly to the asbestos material in a building where the asbestos material is used, or the like, and the asbestos material may be removed in a stage that the water glass-like aqueous solution is hardened, asbestos is scarcely scattered and in terms of the safety for workers, this method is more preferable than the above-mentioned treatment method by immersion.

Therefore, in the present invention, it is preferable that an asbestos material is treated in two steps: at first, a step of applying the water glass-like aqueous solution to an asbestos material and a step of removing and transporting the asbestos material in the stage that the water glass-like aqueous solution is hardened, and further immersing the asbestos material in the water glass-like aqueous solution in a treatment site.

Each treatment step is not limited to once. Since a further firm glassy substance can be formed by treatment repeated a plurality of times, it is preferable to carry out treatment two or more times.

After the treatment step, when the water glass-like aqueous solution is hardened and the glassy substance is formed in the inside and outside of the asbestos material, the weight of the asbestos fibers is increased and therefore, the property of scattering and floating in atmospheric air is lost and diffusion of the asbestos powder dust can be suppressed.

Therefore, the asbestos material after formation of the glassy substance scarcely scatters as asbestos powder dust, and without aspiration of asbestos powder dust by workers, the work can be safely carried out.

Next, in the method of the present invention, the asbestos material coated with the glassy substance is heated.

That is, it is known well that, for example, chrysotile among asbestos is heated at about 700°C to remove to remove crystal water and is heated at about 900°C to be denatured into harmless foresterite. However, in order to completely convert asbestos into a harmless substance by heating, a high temperature furnace to be actually used at 1400 to 1500°C is required and therefore there is a problem that common incinerators cannot stand such a high temperature.

With respect to this matter, in the method of the present invention, when asbestos coated with the glassy substance is fired in a furnace, first, crystal water is isolated from asbestos in the glassy substance by heating at about 700°C to give powdered asbestos which loses the bonding power and further when the glassy substance coating the surface of the asbestos is started dissolving at a temperature exceeding 800°C, the asbestos which loses the bonding power is firmly bonded with the melted glassy substance while being kept in the powder state to become a harmless solid matter, and accordingly the inventors have found that asbestos can be sufficiently converted into harmless substances by heating treatment at a relatively low temperature of 800°C or higher.

That is, in the method of the present invention, if the treatment temperature of 800°C or higher is given in the heating treatment, the treatment can be carried out sufficiently, and even if a furnace with a relatively low temperature of about 800°C to 1200°C is used, the asbestos can be sufficiently converted into harmless substances.

Further, since scattering of asbestos powder dust is not caused also in the heating treatment, the workers can safely work without aspirating the asbestos powder dust.

In the method of the present invention, since disposal or landfill is carried out in a harmless state by heating treatment, there is no risk of occurrence of secondary pollution and thus the disposal and landfill may be carried out without any limit of sites.

Further, it is made possible to reuse the solid matter converted into the harmless substance by heating as construction materials such as a cement material and aggregate.

In the treatment method of the present invention, even if the asbestos material coated with the glassy substance is highly bulky, since the glassy substance melted during the heating treatment permeates voids among the fiber meshes of the asbestos, even the asbestos existing in the center of the volume can firmly bonded with the glassy substance.

However, in order to quickly carry out heating treatment, it is preferable to lower the volume of the asbestos material coated with the glassy substance. Therefore, in the treatment method of the present invention, it is preferable to coat the asbestos material with the glassy substance and at the same time to form the asbestos material into a sheet-like form.

That is, it is made possible that the heat is quickly transmitted to the inside of the glassy substance at the time of heating treatment by forming the asbestos material coated with the glassy substance into a thin sheet-like form.

Means for coating the asbestos material with the glassy substance and at the same time forming the asbestos material into a sheet-like form is not particularly limited and specific examples thereof may include a method of extrusion molding or roll molding by rollers before the water glass-like aqueous solution is sufficiently hardened.

The asbestos formed into a sheet-like form and coated with the glassy substance may be subjected to heating treatment as it is or properly cut or crushed and then successively subjected to heating treatment.

### EFFECTS OF THE INVENTION

The method of the present invention is a novel method for treating asbestos having the above-mentioned configuration and capable of sealing asbestos by safe and simple work and converting asbestos into harmless substances at a relatively low temperature.

That is, in the method of the present invention, since an asbestos material is first treated with a water glass-like aqueous solution and then asbestos coated with a coating of the glassy substance is fired in a furnace, even if a furnace at a relatively low temperature of 800 to 1000°C is used, the asbestos can be sufficiently converted into harmless substances and accordingly, the energy can actually be saved in the heating treatment.

A place for landfill of the harmless solid matter is not limited and it is made possible to reuse the harmless solid matter for construction materials such as cement materials and aggregate.

### BEST MODE FOR CARRYING OUT THE INVENTION

Hereinafter, examples of the method of the present invention will be described, however the method of the present invention is not limited to these examples.

### Example 1

### Preparation of water glass-like aqueous solution

A water glass-like aqueous solution was prepared by dissolving 20 parts by weight of sodium silicate and 20 parts by weight of lithium silicate in 60 parts by weight of water.

### Curing agent

An aqueous solution of sodium borate was used as a curing agent.

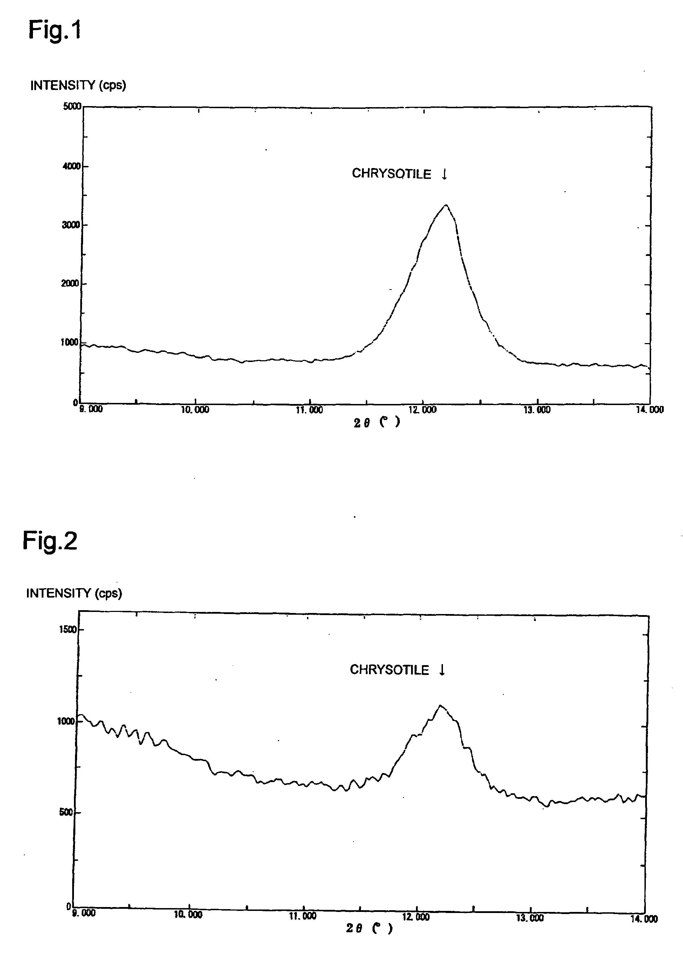

The curing agent was mixed with the above-mentioned water glass-like aqueous solution in a ratio of 15 to 20% by weight of sodium borate in the curing agent to total of sodium silicate and lithium silicate in the solution and the mixture was sprayed two times in a coating amount of 0.4 to 0.6 kg/m² to an asbestos heat insulator in a work field of dismantling a building.
The result of x-ray diffraction quantitative analysis of chrysotile in the asbestos heat insulator is shown in Fig. 1.

The water glass-like aqueous solution was hardened about 24 hours after the application, and then the asbestos heat insulator coated with a coating of a glassy substance was separated and removed and a portion thereof was loaded into a heat resistant container.
The result of x-ray diffraction quantitative analysis of chrysotile in the asbestos heat insulator coated with the glassy substance is shown in Fig. 2.

It was not confirmed that the scattering of asbestos powder dust occurred from the asbestos heat insulator coated with the coating of the glassy substance.

Next, the asbestos heat insulator coated with the coating of the glassy substance loaded into the heat resistant container was heated by a gas burner.
The treatment temperature at that time was about 900°C.

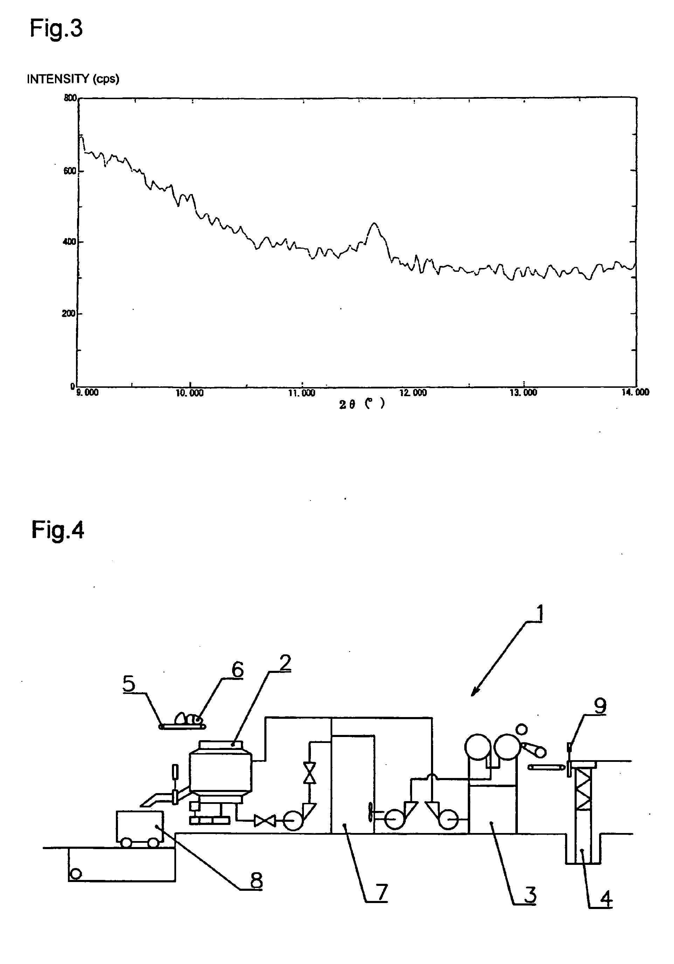

Next, when the asbestos heat insulator coated with the coating of the glassy substance after the heating treatment was observed, it was confirmed that the asbestos was changed into a solid matter sounding like dry bones.
The result of x-ray diffraction quantitative analysis of chrysotile in the solid matter is shown in Fig. 3.

As being understood from the diffraction quantitative analysis results shown in Figs. 1 to 3, it was confirmed that the detection amount of chrysotile was remarkably decreased in the asbestos heat insulator coated with the coating of the glassy substance and chrysotile was almost absolutely not detected in the solid matter after the heating treatment.

Accordingly, it was confirmed that asbestos can be enclosed by safe and simple work and the asbestos can be converted into harmless substances at a relatively low temperature by the method of the present invention.

### Example 2

Fig. 4 is a schematic view showing the outline of an automatic treatment apparatus 1 for carrying out the treatment method of the present invention.

This treatment apparatus 1 is a reformed facility to be used in a paper manufacturing industry and comprises a mixing bath (pulper) 2 for mixing an asbestos material and a water glass-like aqueous solution, a sheet processing part (cylinder press) 3 for processing the asbestos mixed with the water glass-like aqueous solution into a sheet-like form, and a heating treatment part (electric furnace) 4.

The treatment process of the asbestos material by the treatment apparatus 1 will be described. First, an asbestos material 6 was loaded into the mixing bath 2 from a conveyer 5 for loading. The asbestos material 6 to be loaded could be enclosed in a bag made of polyethylene or the like.

At that time, in order to prevent scattering and leakage of the asbestos loaded into the mixing bath, it is preferable to set the inside of the mixing bath 2 in a reduced pressure state as compared with the outside air. The air suctioned for reducing the pressure is preferable to be filtered by a filter having ultrafine pores such as a HEPA filter to prevent asbestos from releasing to atmospheric air. Further, the filter used at this time is preferable to be treated with a water glass-like aqueous solution (by the treatment method of the present invention).

The mixing bath 2 stored the water glass-like aqueous solution supplied properly from a damp chest 7 and the loaded asbestos material 6 was stirred in the water glass-like aqueous solution. The bag enclosing the asbestos material 6 was torn by the stirring and the asbestos material 6 in the bag was exposed and brought into contact with the water glass-like aqueous solution.

The mixed matter other than asbestos was separated to a certain extent and discharged as a residue to a residue receiving part 8.

On the other hand, the asbestos material 6 mixed sufficiently with the water glass-like aqueous solution was introduced into the sheet processing part 3 through a transportation pipe.

In the sheet processing part 3, the asbestos material 6 mixed with the water glass-like aqueous solution was processed into a sheet-like form by squeezing the excess water glass-like aqueous solution. The squeezed water glass-like aqueous solution was turned again back to the damp chest 7.

The asbestos material 6 processed into a sheet-like form and coated with the coating of the glassy substance was cut into a proper size by a cutting part 9 and thereafter, loaded into the heating treatment part 4 and heated at a temperature of 800°C or more.

### BRIEF DESCRIPTION OF THE DRAWINGS

Fig. 1 shows the result of x-ray diffraction quantitative analysis of chrysotile in the asbestos heat insulator.
Fig. 2 shows the result of x-ray diffraction quantitative analysis of chrysotile in the asbestos heat insulator coated with the glassy substance.
Fig. 3 shows the result of x-ray diffraction quantitative analysis of chrysotile in the solid matter.
Fig. 4 is a schematic view showing the outline of an automatic treatment apparatus for carrying out the treatment method of the present invention.

### EXPLANATION OF REFERENCE NUMERALS

1: automatic treatment apparatus
2: mixing bath
3: sheet processing part
4: heating treatment part
5: conveyer for loading
6: asbestos material
7: damp chest
8: residue receiving part
9: cutting part

## Claims

1. A method for treating asbestos comprising treating an asbestos material with a water glass-like aqueous solution to coat the asbestos material with a glassy substance, and successively carrying out heating treatment.

2. The method for treating asbestos according to claim 1, wherein the water glass-like aqueous solution is prepared using water with minute water molecular clusters.

3. The method for treating asbestos according to claim 1 or 2, wherein a surfactant is used together with the water glass-like aqueous solution.

4. The method for treating asbestos according to any one of claims 1 to 3, wherein a curing agent is used together with the water glass-like aqueous solution.

5. The method for treating asbestos according to claim 4, wherein the curing agent is an inorganic type curing agent.

6. The method for treating asbestos according to claim 4 or 5, wherein the curing agent is a hydrophilic curing agent.

7. The method for treating asbestos according to any one of claims 1 to 6, wherein the asbestos material is coated with the glassy substance by immersing the asbestos material in the water glass-like aqueous solution.

8. The method for treating asbestos according to one of claims 1 to 6, wherein the asbestos material is coated with the glassy substance by applying the water glass-like aqueous solution to the asbestos material.

9. The method for treating asbestos according to any one of claims 1 to 8, wherein heating treatment is carried out at a treatment temperature of 800°C or higher.

10. The method for treating asbestos according to any one of claims 1 to 9, wherein the asbestos material is coated with the glassy substance and at the same time formed into a sheet-like form.
